# FASCICULE DE BREVET EUROPEEN

(11) **EP 0 868 247 B1**
(45) Date de publication et mention de la délivrance du brevet: **02.10.2002**
(21) Numéro de dépôt: 96939158.0
(22) Date de dépôt: 20.11.1996
(51) Int. Cl.: B23K 9/02

(54) **PROCEDE DE RACCORDEMENT PAR SOUDAGE HETEROGENE DE DEUX PIECES ET UTILISATION**
VERFAHREN ZUM VERBINDEN DURCH HETEROGENSCHWEISSEN VON ZWEI WERKSTÜCKEN UND SEINE ANWENDUNG
METHOD FOR JOINING TWO PARTS BY HETEROGENEOUS WELDING AND USE THEREOF

(30) Priorité: 18.12.1995 FR 9514991
(43) Date de publication de la demande: 07.10.1998
(73) Titulaire: Framatome ANP, 92400 Courbevoie (FR)
(72) Inventeur: FOURNIER, Yves, F-71880 Chantenoy-le-Royal (FR); PEIGNEY, Alain, F-71240 Saint-Loup-de-Varennes (FR); DUNAND-ROUX, Léon, F-71880 Chantenoy-le-Royal (FR)
(74) Mandataire: Bouget, Lucien
(86) Numéro de dépôt international: FR9601838
(87) Numéro de publication internationale: WO97022432

(56) Documents cités:
- EP-A- 0 433 179
- FR-A- 2 388 627
- FR-A- 2 701 880
- US-A- 2 963 129
- US-A- 4 703 885
- US-A- 5 132 078
- US-A- 5 357 078
- WELDING INTERNATIONAL, vol. 5, no. 1, 1 Janvier 1991, pages 69-76, XP000173135 WEISSELBERG A ET AL: "THE TECHNOLOGICAL PROBLEMS OF SUBMERGED-ARC WELDING IN NARROW WELD GAPS"

## Description

L'invention concerne un procédé de raccordement par soudage hétérogène d'une première pièce en acier de construction faiblement allié et d'une seconde pièce en acier inoxydable austénitique.

Les réacteurs nucléaires et en particulier les réacteurs nucléaires à eau sous pression comportent des composants tels que la cuve du réacteur, les générateurs de vapeur et le pressuriseur qui sont réalisés en acier de construction à haute résistance faiblement allié, revêtu intérieurement d'une couche d'acier inoxydable et reliés par l'intermédiaire d'une ou plusieurs tubulures à une ou plusieurs tuyauteries en acier inoxydable austénitique constituant par exemple des canalisations du circuit primaire du réacteur.

Les générateurs de vapeur des réacteurs nucléaires à eau sous pression comportent une boîte à eau ayant une paroi de forme hémisphérique constituant la partie inférieure du générateur de vapeur, dans laquelle sont formées deux tubulures qui sont reliées par soudage à deux canalisations du circuit primaire du réacteur.

Les tubulures de raccordement du générateur de vapeur qui sont en acier de construction et revêtues intérieurement d'acier inoxydable doivent être fixées par soudage bout à bout sur une tuyauterie en acier inoxydable austénitique.

Il est donc nécessaire de réaliser une soudure de jonction hétérogène entre la tubulure et la tuyauterie, cette soudure hétérogène étant réalisée en déposant un métal d'apport à l'intérieur d'un chanfrein ménagé entre la tubulure et la tuyauterie ou entre la tubulure et un tronçon intermédiaire de raccordement en acier inoxydable austénitique.

Préalablement à la réalisation de la soudure hétérogène entre la tubulure et la tuyauterie ou le tronçon intermédiaire, il est nécessaire de déposer une couche épaisse d'acier inoxydable ou d'alliage de nickel, appelée "beurrage", sur une partie d'extrémité de la tubulure constituant une surface de délimitation du chanfrein dans lequel on dépose le métal d'apport, lors du soudage.

Un tel procédé qui nécessite une préparation des zones de jonction des pièces après leur usinage est d'une mise en oeuvre délicate et nécessite un temps d'exécution relativement long.

En outre, on réalise le joint soudé en juxtaposant des cordons de soudure sous forme de couches successives qui sont empilées l'une sur l'autre dans la direction de l'épaisseur des pièces, cette direction étant sensiblement perpendiculaire à la direction longitudinale du joint soudé. Chacune des couches qui occupe toute la largeur du chanfrein entre les deux pièces, dans une direction perpendiculaire à la fois à la direction longitudinale et à la direction de l'épaisseur des pièces, est constituée d'un nombre de cordons de soudure juxtaposés qui peut être important, en fonction de la largeur moyenne du chanfrein.

Dans le cas où l'on utilise le procédé TIG, chacun des cordons de soudure est obtenu par fusion d'un fil d'apport par une électrode alimentée sous une tension définie, par un courant électrique ayant une intensité définie. Le fil en métal d'apport qui est approvisionné à une vitesse fixe dans la zone de soudure est fondu par l'arc électrique formé entre l'électrode et les pièces à souder, au niveau du chanfrein.

Il est également possible d'utiliser d'autres procédés de soudage tels que le procédé à électrode enrobée.

L'obtention de couches de métal d'apport successives présentant une épaisseur sensiblement constante, ainsi qu'une très bonne qualité et une grande compacité du métal d'apport requiert un contrôle tout-à-fait précis des conditions de soudage, lors du dépôt de chacun des cordons de soudure.

Les procédés connus de raccordement par soudure hétérogène sont donc complexes et nécessitent des temps d'exécution qui peuvent être très longs.

Le but de l'invention est donc de proposer un procédé de raccordement par soudage hétérogène d'une première pièce en acier de construction et d'une seconde pièce en acier inoxydable austénitique consistant à disposer des extrémités usinées des pièces en vis-à-vis, de manière à constituer un chanfrein de soudage s'étendant suivant une direction longitudinale entre les pièces et à déposer un métal d'apport dans le chanfrein de soudage par couches successives superposées suivant une direction perpendiculaire à la direction longitudinale et correspondant à l'épaisseur des pièces, par fusion d'un fil approvisionné à une vitesse définie, par un arc électrique formé entre une électrode alimentée en courant électrique de soudage à une intensité et sous une tension définies et les pièces à souder qui sont séparées, dans une direction perpendiculaire, à la fois à la direction longitudinale et à la direction de l'épaisseur des pièces, par une distance constituant la largeur du chanfrein, ce procédé permettant de réaliser de manière simple et rapide le joint soudé, avec une parfaite qualité d'exécution.

Dans ce but, chaque couche de métal d'apport est constituée essentiellement par un cordon de soudure obtenu par fusion du fil en métal d'apport occupant pratiquement toute la largeur du chanfrein et l'intensité et la tension du courant électrique de soudage et la vitesse d'approvisionnement du fil sont déterminées en fonction de la largeur du chanfrein.

Afin de bien faire comprendre l'invention, on va maintenant décrire, à titre d'exemple non limitatif, en se référant aux figures jointes en annexe, un procédé de raccordement par soudage hétérogène suivant l'invention et son utilisation pour le raccordement d'une tuyauterie primaire à une tubulure d'un générateur de vapeur d'un réacteur nucléaire à eau sous pression.

La figure 1 est une vue en élévation du fond d'un générateur de vapeur d'un réacteur nucléaire à eau sous pression, pendant une opération de raccordement d'une portion de canalisation à une tubulure du générateur de vapeur par le procédé suivant l'invention et d'un dispositif permettant de mettre en oeuvre le procédé.

La figure 2 est une vue transversale schématique du chanfrein de soudage et de l'électrode et du fil d'apport de la tête de soudage du dispositif.

Les figures 3A et 3B sont des vues en coupe longitudinale schématique montrant la disposition de l'électrode de soudage dans le chanfrein, lors de la réalisation du procédé de soudage suivant l'invention et suivant deux variantes.

La figure 4 est une vue en coupe de direction axiale d'un chanfrein de soudage utilisé dans un procédé de raccordement suivant l'invention.

La figure 5 est une vue en coupe de direction axiale montrant différentes zones d'un chanfrein dont le remplissage en métal d'apport est réalisé dans des conditions différentes.

La figure 6 est une vue en coupe de direction axiale d'un joint soudé hétérogène réalisé par le procédé suivant l'invention.

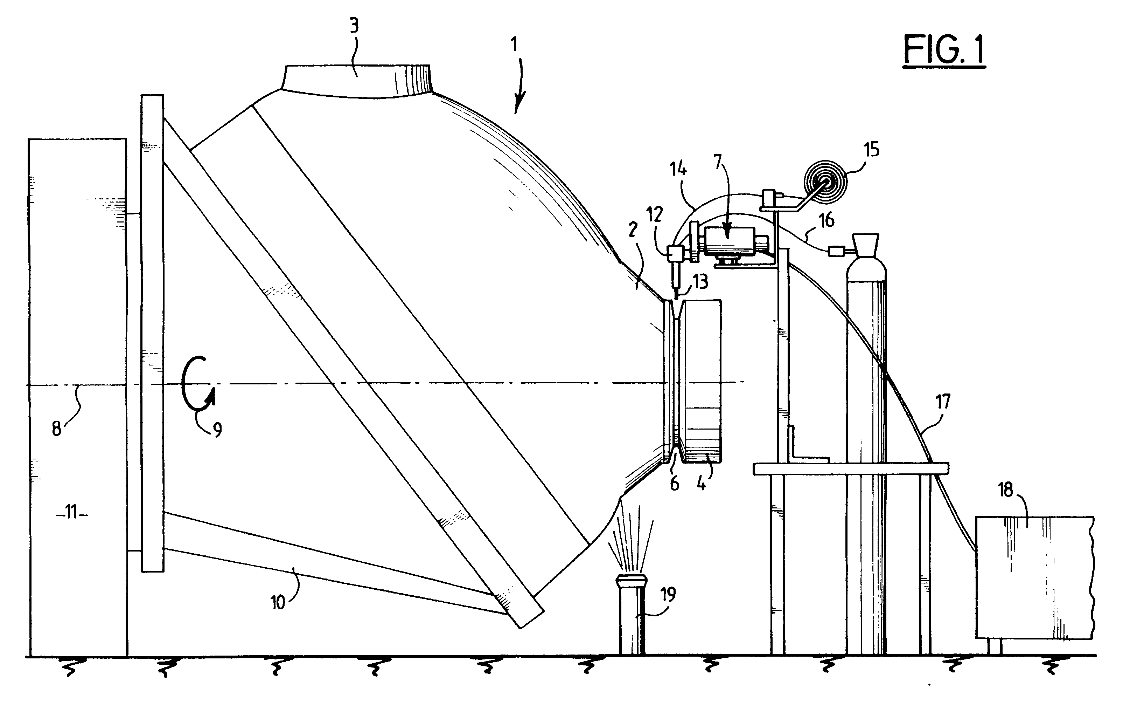

Sur la figure 1, on voit un fond de générateur de vapeur d'un réacteur nucléaire à eau sous pression, désigné de manière générale par le repère 1. Le fond de générateur de vapeur 1 est constitué par une enveloppe ayant la forme d'une calotte sphérique et traversée par deux ouvertures suivant lesquelles sont formées des tubulures 2 et 3 permettant le raccordement de canalisations du circuit primaire du réacteur nucléaire.

Le fond de générateur de vapeur et les tubulures 2 et 3 sont réalisés en un acier de construction faiblement allié et sont revêtus intérieurement par une couche d'acier inoxydable.

Les canalisations du circuit primaire qui doivent être raccordées aux tubulures 2 et 3 du fond de générateur de vapeur sont en acier inoxydable austénitique. Le raccordement par soudure des canalisations sur les tubulures nécessite un soudage hétérogène.

Sur la figure 1, on a représenté une portion 4 de canalisation primaire en acier inoxydable austénitique dont on réalise le raccordement à la tubulure 2 par une méthode de soudage suivant l'invention. La portion 4 de canalisation primaire peut constituer par exemple un tronçon de raccordement qui peut être raccordé ultérieurement à une canalisation primaire par une soudure homogène entre deux pièces tubulaires en acier inoxydable austénitique.

La soudure hétérogène entre le tronçon de raccordement 4 en acier inoxydable austénitique et la tubulure 2 en acier de construction faiblement allié est réalisée par remplissage d'un chanfrein 6 par du métal d'apport déposé à l'état fondu dans le chanfrein par une tête de soudage TIG 7.

Le chanfrein 6 est obtenu en usinant la partie d'extrémité de la tubulure 2, et une partie d'extrémité du tronçon 4 et en plaçant les surfaces usinées en vis-à-vis, de manière qu'elles constituent les deux faces latérales annulaires du chanfrein 6. La pièce 4 est maintenue dans l'alignement axial de l'ouverture du fond de générateur de vapeur et de la tubulure 2, par une pièce d'assemblage et de fixation provisoire de forme tubulaire engagée dans l'alésage intérieur de la pièce de raccordement 4 et de la tubulure 2. Cette pièce tubulaire d'assemblage et de fixation provisoire peut en même temps constituer une latte de soudage en contact avec le fond du chanfrein 6.

L'ensemble constitué par le fond de générateur de vapeur 1 et la pièce tubulaire de raccordement 4 est fixé sur un support 10 qui est mis en rotation autour de l'axe 8 commun à la tubulure et à la pièce de raccordement tubulaire 4, comme représenté par la flèche 9, pour assurer un remplissage du chanfrein 6 par du métal d'apport, sur toute sa périphérie. Le remplissage du chanfrein 6 est réalisé par passes successives au cours de chacune desquelles on réalise, dans la mesure du possible, le dépôt d'une couche de métal d'apport suivant toute la largeur du chanfrein. Au cours de chacune des passes de soudage successives, le fond de générateur de vapeur 1 tourne autour de l'axe 8 d'un peu plus d'un tour. On assure ainsi le recouvrement des couches successives de métal d'apport.

Sur la figure 1, on a également représenté l'ensemble de l'installation de soudage comportant le support 10 du fond de générateur de vapeur 1 qui est mis en rotation autour de l'axe 8, par un positionneur motorisé 11.

La tête de soudage TIG 7 porte une torche de soudage 12 comportant une électrode de soudage 13 en tungstène introduite dans le chanfrein de soudage 6, dans une direction sensiblement verticale et dans une position sensiblement centrale. La torche de soudage 12 est alimentée en fil d'apport 14 par une bobine de fil d'apport 15 portée par la tête de soudage 7. La torche de soudage 12 est alimentée en un gaz inerte qui peut être constitué par de l'argon, un mélange d'hélium et d'argon, de l'hélium ou par d'autres gaz inertes, par une tuyauterie d'alimentation 16.

La tête de soudage 7 est également reliée par l'intermédiaire d'un câble d'alimentation 17 à un générateur électrique 18, de manière que l'électrode soit alimentée en un courant électrique dont la tension et l'intensité peuvent être réglées et définies de manière très précise.

Un arc électrique se forme entre l'électrode 13 et le fond du chanfrein 6 qui peut être déjà partiellement rempli par du métal d'apport. Le fil en métal d'apport est fondu dans l'arc et se dépose dans le fond du chanfrein à l'aplomb de l'électrode 13. Au cours de la rotation du fond du générateur de vapeur, une couche de métal d'apport est déposée dans le fond du chanfrein, de préférence sur toute la largeur du chanfrein entre la tubulure 2 et la pièce de raccordement tubulaire 4. On réalise un préchauffage de la tubulure 2, au voisinage de la zone de raccordement, en utilisant un système de préchauffage 19 qui peut être disposé par exemple à l'extérieur du fond du générateur de vapeur.

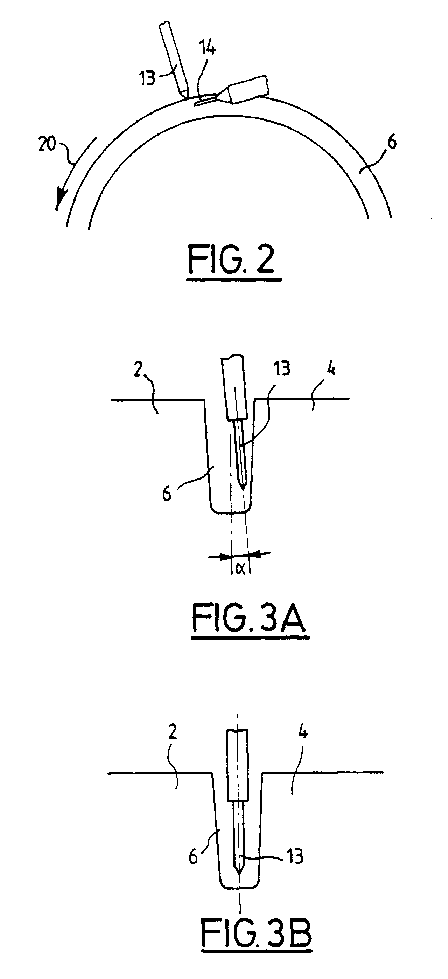

Sur la figure 2, on a représenté de manière schématique le chanfrein 6 ménagé entre les pièces en rotation dans le sens indiqué par la flèche 20.

On voit que l'électrode 13 est inclinée d'un angle (d'environ 10°), par rapport à la verticale, dans le sens de la flèche 20. Le fil en métal d'apport 14 est approvisionné, à l'avant de l'électrode 13, si l'on considère le sens de rotation 20 des pièces. Le fil de métal d'apport 14 est avancé en continu dans la zone où se forme l'arc électrique entre l'électrode 13 et le fond du chanfrein 6. Le bain de métal liquide constitué par le métal d'apport fondu se dépose sur le fond du chanfrein entre les pièces en rotation. Le soudage est dit à passes tirées.

Sur la figure 3A, on a représenté le chanfrein 6 en coupe axiale, c'est-à-dire en coupe par un plan passant par l'axe 8 commun à la tubulure 2 et à la pièce de raccordement 4.

L'axe de l'électrode 13 se trouve dans un plan faisant un angle α faible, de l'ordre de quelques degrés avec la verticale et dirigé vers la pièce de raccordement 4 en acier austénitique.

Sur la figure 3B, on a représenté l'électrode 13 dont l'axe se trouve dans un plan parfaitement vertical.

Pour la mise en oeuvre du procédé suivant l'invention, on peut utiliser une électrode dont l'axe est légèrement incliné vers la pièce en acier inoxydable austénitique ou une électrode parfaitement verticale mais dans ce cas, l'électrode peut être légèrement décalée vers la pièce 4 en acier inoxydable austénitique.

Le fil d'apport est généralement en un alliage à base de nickel et de chrome.

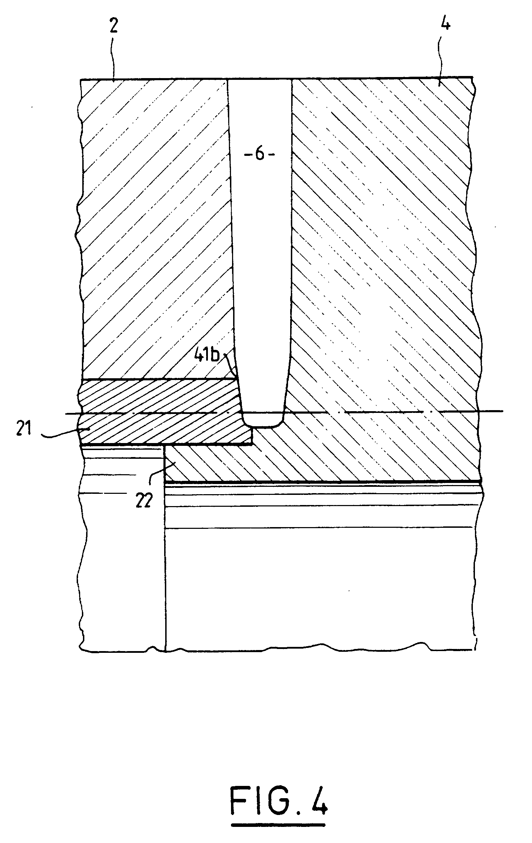

Sur la figure 4, on a représenté à plus grande échelle, le chanfrein de soudage 6 ménagé entre les extrémités en vis-à-vis de la tubulure 2 en acier de construction faiblement allié et de la pièce de raccordement 4 en acier inoxydable austénitique. L'acier inoxydable austénitique de la pièce 4 est un acier du type 316L. La tubulure 2 est revêtue intérieurement d'une couche 21 en acier inoxydable, par exemple du type 308L ou 309L.

La partie d'extrémité de la pièce de raccordement 4 en acier inoxydable austénitique est usinée de manière à constituer un talon annulaire 22 en saillie en direction de la tubulure 2, à sa partie interne.

Les surfaces latérales du chanfrein usinées dans la pièce de raccordement 4 et dans la tubulure 2 sont sensiblement symétriques par rapport à un plan médian du chanfrein et légèrement inclinées vers l'extérieur, dans le sens allant de l'intérieur vers l'extérieur des pièces. La surface latérale du chanfrein, du côté de la tubulure 2 est usinée dans le métal de la tubulure et dans la couche de revêtement inoxydable 21. En position d'assemblage des pièces, le talon 22 de la pièce de raccordement 4 en acier inoxydable vient chevaucher la couche de revêtement 21, à l'intérieur des pièces.

Le chanfrein 6 délimité par les pièces 2 et 4 présente des faces latérales faiblement inclinées par rapport au plan médian du chanfrein (plan vertical).

Dans la partie interne du chanfrein, l'angle d'inclinaison des parois latérales du chanfrein avec le plan médian vertical est voisin de 4°. Dans la partie restante du chanfrein débouchant sur la surface externe des pièces, l'inclinaison des parois latérales par rapport au plan médian vertical est de l'ordre de 1°.

La largeur du chanfrein dans la direction axiale des pièces perpendiculaire à la direction radiale (épaisseur des pièces) et à la direction circonférentielle (direction longitudinale du chanfrein) varie depuis une valeur minimale de l'ordre de 8 mm en fond de chanfrein, jusqu'à une valeur maximale sur la surface extérieure des pièces, de l'ordre de 12,5 mm.

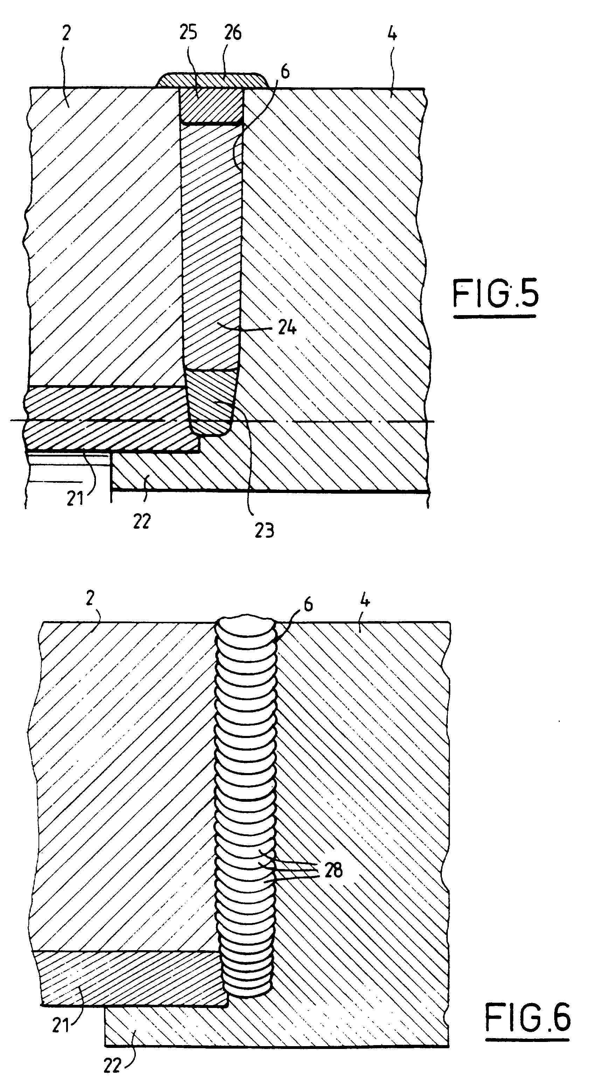

Un chanfrein tel que représenté sur la figure 5 présentant des caractéristiques dimensionnelles données ci-dessus peut être généralement rempli par des couches de métal d'apport successives dans la direction de l'épaisseur des pièces comportant chacune un seul cordon de soudure s'étendant entre les deux bords latéraux du chanfrein, c'est-à-dire entre la pièce 2 et la pièce 4. Il ne sort toutefois pas du cadre de l'invention de réaliser le remplissage d'un chanfrein par des couches de métal d'apport dont certaines comportent plus d'un cordon de soudure. Il peut être nécessaire en effet de compléter un premier cordon de soudure déposé dans le chanfrein par un ou plusieurs cordons chevauchant le premier cordon de soudure et assurant la jonction de la couche avec les bords du chanfrein.

Comme il sera expliqué par la suite, les paramètres de soudage doivent être réglés en fonction de la largeur du chanfrein de soudage 6 qui est variable suivant la direction de l'épaisseur des pièces 2 et 4.

Le procédé de soudage est un procédé TIG automatique à courant continu pulsé. La fréquence de pulsation peut être par exemple de l'ordre de deux périodes par seconde. Pendant une première partie du cycle correspondant à une période, le courant de soudage est fixé à une valeur Iₕ correspondant à un palier haut, puis pendant la seconde partie du cycle, à une seconde valeur I_{b} inférieure à Iₕ, correspondant à un palier bas. Au cours du palier haut de la période, l'arc électrique s'étend sensiblement sur toute la largeur du chanfrein alors que pendant le palier bas de la période, l'arc électrique est réduit de manière à se concentrer dans la partie centrale du chanfrein.

Le fil en métal d'apport 14 peut être amené dans l'arc électrique à une première vitesse pendant la première partie de la période et à une vitesse inférieure à la première pendant la seconde partie de la période. Pendant la première partie de la période, l'intensité étant à sa valeur maximale Iₕ, le fil en métal d'apport parvient dans la zone balayée par l'arc électrique et fond de telle sorte que le métal d'apport remplit le fond du chanfrein. A la fin de la première partie du cycle, la tension et l'intensité sont ramenées à leur valeur basse et simultanément la vitesse d'avance du fil est réduite de sa première à sa seconde valeur. L'étalement du métal liquide sur le fond du chanfrein, sous la forme de la couche déposée, a lieu pendant la seconde partie du cycle, l'intensité du courant étant fixée à la valeur I_{b} et la vitesse d'avance du fil à sa seconde valeur.

Il peut être possible également d'amener le fil dans l'arc électrique à une vitesse constante.

On verra par la suite qu'en fixant Iₕ, I_{b}, la tension d'arc U et la vitesse du fil V à des valeurs définies en fonction de la largeur du chanfrein, on réalise un dépôt régulier de métal d'apport sous forme d'une couche compacte d'épaisseur constante dans laquelle le métal déposé présente une bonne qualité métallurgique.

Sur la figure 5, on a représenté de manière schématique, les différentes zones de remplissage du chanfrein 6 ménagé entre la tubulure 2 en acier faiblement allié et la pièce de raccordement 4 en acier inoxydable austénitique.

Une première zone 23 appelée racine située dans la partie d'extrémité du chanfrein voisine de la partie intérieure de pièces 2 et 4 est remplie pendant le soudage, au cours des premières passes de soudage appelées passes de racine, par un métal d'apport constitué par un premier alliage de nickel (alliage 52).

Une seconde zone 24 ou zone de remplissage située dans la partie médiane du chanfrein 6 entre la partie interne et la partie externe des pièces 2 et 4 est remplie pendant le soudage par des couches successives d'un second alliage de nickel (alliage 82).

Une troisième zone 25 située au voisinage de la partie extérieure des pièces 2 et 4 est également remplie pendant le soudage par du métal d'apport constitué par le second alliage de nickel mais dans des conditions en ce qui concerne les paramètres de soudage différentes des conditions de remplissage de la seconde zone 24.

Eventuellement, on effectue le dépôt d'une couche de finition 26 légèrement en saillie à l'extérieur des pièces 2 et 4.

En variante, l'ensemble du chanfrein pourrait être rempli par des couches qui sont toutes réalisées à partir du premier alliage de nickel (alliage 52).

Après le soudage, on peut effectuer un usinage de la partie intérieure des pièces soudées pour supprimer le talon 22 et une partie de la racine 23 de la soudure.

Les paramètres de soudage Iₕ, I_{b}, V et U sont fixés à des valeurs qui dépendent de la largeur du chanfrein entre les pièces 2 et 4, pendant les passes de racine et les passes de remplissage, de manière qu'on puisse réaliser des couches successives de métal d'apport déposé de qualité parfaite et constituées essentiellement par un seul cordon de soudure occupant pratiquement toute la largeur du chanfrein.

On a indiqué dans le tableau ci-dessous les intervalles de réglage des paramètres de soudage Iₕ, I_{b}, V et U ainsi que la vitesse d'avance du soudage Vₐ pour un chanfrein dont la largeur varie entre 8 et 12,5 mm entre le fond de chanfrein (début des passes de racine) et le sommet du chanfrein (fin du remplissage). L'intervalle de variation de la largeur du chanfrein dans les zones 23, 24 et 25 a été découpé en quatre sous-intervalles ( 8 à 9,5 mm ; 9,5 à 11 mm ; 11 à 12 mm ; 12 à 12,5 mm) à l'intérieur de chacun desquels les paramètres de soudage peuvent être réglés autour d'une valeur fixe comprise dans l'intervalle donné dans le tableau.

**TABLEAU**

| Largeur de chanfrein 8 à 12,5 mm | I_{H} (A) | I_{B} (A) | V. avance Vₐ Cm/mn | Vitesse fil V m/mn | Tension Arc (U) |
|---|---|---|---|---|---|
| mini | 260 | 140 | 7 | 1,5 | 11 |
| maxi | 340 | 200 | 9 | 3 | 14,5 |

Le tableau est relatif à un procédé de soudage TIG automatique d'une tubulure en acier 16MND5 et d'un tronçon de raccordement en acier inoxydable 316L. La tubulure est revêtue intérieurement d'acier inoxydable. On utilise un fil en métal d'apport massif d'un diamètre de 0,9 mm et une électrode de tungstène d'un diamètre de 3,2 mm. Le procédé est à courant continu pulsé tel que défini plus haut et opère par passes tirées.

Les pièces sont préchauffées à une température de 175 à 225°C et on envoie dans la zone de soudage, par l'extérieur des pièces, un gaz inerte.

Il est possible de maintenir l'intensité haute Iₕ du courant pulsé à une valeur fixe (par exemple 300 Ampères) pendant toutes les phases de soudage et de moduler l'intensité basse I_{b} du courant en fonction de la largeur du chanfrein, à l'intérieur de l'intervalle de variation défini.

La vitesse d'avance du fil V est fixée en fonction de la largeur du chanfrein, à l'intérieur de chacun des sous-intervalles de variation qui ont été définis.

Sur la figure 6, on a représenté les couches 28 successives de métal d'apport déposé dans le chanfrein 6, en utilisant le procédé de soudage suivant l'invention, c'est-à-dire en fixant les paramètres de soudage en fonction de la largeur du chanfrein.

Chacune des couches 28 est constituée par un seul cordon de soudage. Le métal liquide déposé à l'intérieur du chanfrein s'étend transversalement sur toute la largeur du chanfrein entre la pièce 2 et la pièce 4. Il est à remarquer qu'au cours du soudage, les zones marginales des pièces 2 et 4 situées sur le bord du chanfrein 6 ne sont pas refondues par l'arc électrique de la torche de soudage. Le métal d'apport liquide venant en contact avec les parties marginales des pièces 2 et 4 sur les bords du chanfrein 6 assure l'échauffement de ces zones marginales par conduction thermique, de manière à assurer sur chacune des pièces une liaison métallurgique de très bonne qualité entre la couche de métal d'apport et les parties marginales des pièces 2 et 4, avec une dilution faible et bien contrôlée.

Le réglage des conditions de soudage en fonction de la largeur du chanfrein permet d'obtenir des conditions tout-à-fait reproductibles en ce qui concerne la liaison des couches successives de métal d'apport avec les parties marginales des pièces 2 et 4.

A l'issue du soudage, on peut effectuer un usinage du talon 22 de la pièce 4 et d'une partie de la racine de la soudure ainsi que du métal rapporté sur la partie extérieure du chanfrein en fin de soudage.

Le procédé suivant l'invention a permis d'obtenir de manière tout-à-fait reproductible, des soudures constituées par un empilement de couches constituées chacune essentiellement par un cordon de soudure unique, entre deux pièces de compositions et de structures métallurgiques différentes.

De manière générale, des soudures constituées de couches comportant chacune un seul cordon de soudage déposé au cours d'une passe unique de soudage ont pu être obtenues en ménageant entre les pièces à joindre un chanfrein dont l'inclinaison des parois latérales par rapport à un plan médian est inférieure à 5° environ et dont la largeur entre les pièces à joindre est au plus égale à 16 mm environ. Un tel chanfrein est appelé chanfrein étroit.

Dans le cas de la liaison d'un acier de construction faiblement allié et d'un acier inoxydable austénitique, on utilise comme métal d'apport des nuances d'alliages de nickel renfermant du chrome qui assurent une très bonne tenue mécanique des liaisons soudées.

L'invention ne se limite pas au mode de réalisation qui a été décrit.

C'est ainsi que le réglage des paramètres en fonction de la largeur du chanfrein peut être réalisé d'une manière différente de celle qui a été décrite. La géométrie du chanfrein est généralement parfaitement connue et en particulier, la variation de la largeur du chanfrein suivant la direction de l'épaisseur des pièces peut être déterminée de manière très précise. Il est possible de régler les paramètres directement en fonction de la valeur de la largeur du chanfrein, en utilisant des relations pré-établies ou de fixer à l'avance par étalonnage les valeurs souhaitables des paramètres de soudage à l'intérieur d'intervalles définis de la largeur du chanfrein.

Le procédé suivant l'invention peut mettre en oeuvre des procédés de soudage différents du procédé à courant continu pulsé qui a été décrit plus haut. Dans tous les cas, on effectue le réglage de l'intensité et de la tension du courant de soudage ainsi que de la vitesse d'approvisionnement du fil d'apport, lors de toutes les phases de soudage, quelle que soit la loi de variation du courant et de la tension au cours de ces phases de soudage.

L'invention peut s'appliquer au soudage de pièces ayant une forme différente d'une forme tubulaire.

## Revendications

1. Procédé de raccordement par soudage hétérogène d'une première pièce (2) en acier de construction et d'une seconde pièce (4) en acier inoxydable austénitique consistant à disposer des extrémités usinées des pièces (2, 4) en vis-à-vis, de manière à constituer un chanfrein de soudage (6) s'étendant suivant une direction longitudinale entre les pièces (2, 4) et à déposer un métal d'apport dans le chanfrein de soudage (6) par couches successives (28) superposées suivant une direction perpendiculaire à la direction longitudinale du chanfrein (6) correspondant à l'épaisseur des pièces (2, 4), par fusion d'un fil (14) amené à une vitesse définie dans un arc électrique formé entre une électrode (13) alimentée en courant électrique de soudage à une intensité et sous une tension définies et les pièces à souder (2, 4) qui sont séparées, dans une direction perpendiculaire à la fois à la direction longitudinale du chanfrein (6) et à la direction de l'épaisseur des pièces (2, 4), par une distance constituant la largeur du chanfrein (6), **caractérisé par le fait que** chaque couche de métal d'apport (28) est constituée essentiellement par un cordon de soudure obtenu par fusion du fil (14) en métal d'apport occupant pratiquement toute la largeur du chanfrein (6) et que l'intensité et la tension du courant électrique de soudage et la vitesse d'approvisionnement du fil (14) constituant des paramètres de soudage sont déterminées en fonction de la largeur du chanfrein (6).

2. Procédé suivant la revendication 1, **caractérisé par le fait que** le chanfrein de soudage (6) est un chanfrein étroit délimité par des parois latérales faisant un angle inférieur à 5° environ avec un plan médian du chanfrein et ayant une largeur maximale de 16 mm environ.

3. Procédé de raccordement suivant l'une quelconque des revendications 1 et 2, **caractérisé par le fait qu'**on détermine une pluralité d'intervalles de largeur du chanfrein et qu'on fixe la valeur de l'intensité et de la tension du courant électrique de soudage et la vitesse d'approvisionnement du fil (14) en métal d'apport, constituant les paramètres de soudage, à une valeur déterminée à l'intérieur de chacun des intervalles de largeur du chanfrein.

4. Procédé suivant la revendication 3, **caractérisé par le fait qu'**on détermine, à l'intérieur de chacun des intervalles de largeur du chanfrein, une valeur de réglage des paramètres de soudage et des marges de variation des paramètres de soudage.

5. Procédé suivant l'une quelconque des revendications 1 à 4, dans le cas d'un soudage utilisant un courant continu de soudage pulsé, l'intensité du courant de soudage ayant une valeur haute (Iₕ) dans une première partie d'une période du courant et une valeur basse (I_{b}) dans une seconde partie de la période, **caractérisé par le fait qu'**on fixe la valeur basse de l'intensité (I_{b}) du courant de soudage, la vitesse du fil (14) en métal d'apport pendant la partie haute de la période et pendant la partie basse de la période ainsi que la tension (U) de l'arc, à des valeurs dépendant de la largeur du chanfrein, l'intensité (Iₕ) du courant pendant la partie haute de la pulsation étant maintenue à une valeur fixe quelle que soit la largeur du chanfrein.

6. Procédé de raccordement suivant l'une quelconque des revendications 1 à 5, **caractérisé par le fait que** le métal d'apport est un alliage de nickel.

7. Procédé de raccordement suivant l'une quelconque des revendications 1 à 6, **caractérisé par le fait que** la première pièce (2) et la seconde pièce (4) sont des pièces de forme tubulaire qui sont disposées bout à bout de manière à délimiter entre elles un chanfrein de soudage (6) dont la direction longitudinale correspond à une direction circonférentielle des pièces, la seconde direction suivant l'épaisseur des pièces à une direction radiale et la direction suivant laquelle s'étend la largeur du chanfrein à une direction axiale des pièces (2, 4).

8. Utilisation d'un procédé suivant l'une quelconque des revendications 1 à 7 pour le raccordement d'une tubulure (2) d'un fond de générateur de vapeur (1) d'un réacteur nucléaire à eau sous pression en acier de construction et d'une canalisation du circuit primaire ou une pièce de raccordement (4) au circuit primaire du réacteur nucléaire en acier inoxydable austénitique.

## Patentansprüche

1. Verfahren zum Verbinden durch heterogenes Schweißen eines ersten Werkstücks (2) aus Kunstruktionsstahl und eines zweiten Werkstücks (4) aus nichtoxidierbarem Austenitstahl, welches darin besteht, die bearbeiteten Enden der Werkstükke (2, 4) einander gegenüberliegend so anzuordnen, daß eine Schweißkante (6) entsteht, die sich in Längsrichtung zwischen den Werkstücken (2, 4) erstreckt, und ein Zusatzmetall in der Schweißkante (6) durch Schichten anzulegen, die in einer Richtung senkrecht zur Längsrichtung der Schweißkante (6) entsprechend der Dicke der Werkstücke (2, 4) übereinandergelegt werden, indem ein mit einer definierten Geschwindigkeit herangeführter Draht (14) in einem elektrischen Lichtbogen, der zwischen einer Elektrode (13), die mit elektrischem Schweißstrom mit einer definierten Intensität und einer definierten Spannung versorgt wird, und den zu verschweißenden Werkstücken (2, 4) gebildet wird, geschmolzen wird, die in einer Richtung durch einen Abstand voneinander getrennt sind, die gleichzeitig senkrecht zur Längsrichtung der Schweißkante (6) und zur Richtung der Dicke der Werkstücke (2, 4) ist, wobei der Abstand der Breite der Schweißkante (6) entspricht,
**dadurch gekennzeichnet, daß**
jede Zusatzmetallschicht (28) im wesentlichen aus einem Schweißwulst besteht, der durch das Schmelzen des Drahtes (14) aus Zusatzmetall erhalten wird, der im wesentlichen die ganze Breite der Schweißkante (6) abdeckt, und daß die Intensität und die Spannung des elektrischen Schweißstromes und die Bereitstellungsgeschwindigkeit des Drahtes (14), die die Schweißparameter darstellen, gemäß der Breite der Schweißkante (6) bestimmt werden.

2. Verfahren nach Anspruch 1, **dadurch gekennzeichnet, daß** die Schweißkante (6) eine schmale Schweißkante ist, die durch Seitenwände abgegrenzt ist, die mit einer Mittelebene der Schweißkante einen Winkel von ungefähr kleiner 5° einschließen und eine maximale Dicke von ungefähr 16 mm aufweisen.

3. Verfahren zum Verbinden nach einem der Ansprüche 1 oder 2, **dadurch gekennzeichnet, daß** mehrere Breitenintervalle der Kante bestimmt werden und daß der Wert für die Intensität und die Spannung des elektrischen Schweißstromes und die Bereitstellungsgeschwindigkeit des Drahtes (14) aus Zusatzmetall, die die Schweißparameter darstellen, auf einen Wert festgelegt werden, der im Inneren jedes Intervalls der Breite der Schweißkante bestimmt wird.

4. Verfahren nach Anspruch 3, **gekennzeichnet durch** die Tatsache, daß im Inneren eines jeden Intervalls der Breite der Schweißkante ein Regelwert der Schweißparameter und Bereiche für die Änderung der Schweißparameter bestimmt wird.

5. Verfahren nach einem der Ansprüche 1 bis 4, bei dem beim Schweißen mit der Verwendung eines pulsierten Schweißgleichstroms die Intensität des Schweißstromes in einem ersten Abschnitt einer Zeitdauer des Stromes einen hohen Wert (Iₕ) und einen niedrigen Wert (I_{b}) in einem zweiten Abschnitt der Zeitdauer aufweist, **dadurch gekennzeichnet, daß** der niedrige Wert der Intensität (I_{b})des Schweißstromes, die Geschwindigkeit des Drahtes (14) aus Zusatzmetall bei dem hohen Abschnitt der Zeitdauer und bei dem niedrigen Abschnitt der Zeitdauer ebenso wie die Bogenspannung U auf Werte festgelegt werden, die von der Breite der Schweißkante abhängen, wobei die Intensität (Iₕ) des Stromes während des hohen Abschnitts des Pulses auf einem festen Wert gehalten wird, unabhängig von der Breite der Schweißkante.

6. Verfahren zum Verbinden nach einem der Ansprüche 1 bis 5, **dadurch gekennzeichnet, daß** das Zusatzmetall eine Nickellegierung ist.

7. Verfahren zum Verbinden nach einem der Ansprüche 1 bis 6, **dadurch gekennzeichnet, daß** das erste Werkstück (2) und das zweite Werkstück (4) röhrenförmige Werkstücke sind, die in ihren Enden aneinandergrenzen und zwischen ihnen eine Schweißkante (6) abgrenzen, deren Längsrichtung einer Umfangsrichtung der Werkstücke entspricht, wobei die zweite Richtung in Richtung der Dicke der Werkstücke einer radialen Richtung entspricht und die Richtung entlang der Breite der Schweißkante einer axialen Richtung der Werkstücke (2, 4) entspricht.

8. Verwendung eines Verfahrens nach einem der Ansprüche 1 bis 7, für die Anbindung eines Anschlußstutzens (2) eines Bodens eines Dampferzeugers (1) eines Druckwasserreaktors aus Konstruktionsstahl und eines Kanals des Primärkreislaufes oder eines Verbindungswerkstücks (4) mit dem Primärkreislauf des Kernreaktors aus nichtoxidierbarem austenitischem Stahl.

## Claims

1. Process for connecting by heterogeneous welding a first part (2) of structural steel and a second part (4) of austenitic stainless steel, consisting in arranging machined ends of the parts (2, 4) opposite one another, so as to form a welding bevel (6) extending in a longitudinal direction between the parts (2, 4), and in arranging a filler metal in the welding bevel (6) in successive layers (28) superimposed in a direction perpendicular to the longitudinal direction of the bevel (6) corresponding to the thickness of the parts (2, 4), by the fusion of a wire (14) moved at a defined speed in an electric arc formed between an electrode (13) supplied with electric welding current at a defined intensity and under a defined voltage and the parts to be welded (2, 4), which are separated, in a direction perpendicular both to the longitudinal direction of the bevel (6) and to the direction of the thickness of the parts (2, 4), by a distance constituting the width of the bevel (6), **characterised by** the fact that each layer of filler metal (28) is formed substantially of a welding seam obtained by the fusion of the wire (14) of filler metal occupying practically the whole width of the bevel (6) and that the intensity and the voltage of the electric welding current and the speed of supply of the wire (14), which constitute welding parameters, are determined as a function of the width of the bevel (6).

2. Process according to claim 1, **characterised by** the fact that the welding bevel (6) is a narrow bevel delimited by lateral walls forming an angle of less than about 5° with a centre plane of the bevel and having a maximum width of about 16 mm.

3. Connecting process according to any one of claims 1 and 2, **characterised by** the fact that a plurality of width ranges of the bevel are determined and that the values of the intensity and the voltage of the electric welding current and the speed of supply of the wire (14) of filler metal, which constitute the welding parameters, are fixed at a specific value within each of the width ranges of the bevel.

4. Process according to claim 3, **characterised by** the fact that there is determined, within each of the width ranges of the bevel, a value for setting the welding parameters and the margins of variation of the welding parameters.

5. Process according to any one of claims 1 to 4, in the case of a welding using a pulsed welding direct current, the intensity of the welding current having a high value (Iₕ) in a first part of a period of the current and a low value (I_{b}) in a second part of the period, **characterised by** the fact that the low value of the intensity (I_{b}) of the welding current, the speed of the wire (14) of filler metal during the high part of the period and during the low part of the period as well as the voltage (U) of the arc are fixed at values depending on the width of the bevel, the intensity (Iₕ) of the current during the high part of the pulsing being maintained at a fixed value whatever the width of the bevel.

6. Connecting process according to any one of claims 1 to 5, **characterised by** the fact that the filler metal is a nickel alloy.

7. Connecting process according to any one of claims 1 to 6, **characterised by** the fact that the first part (2) and the second part (4) are tube-shaped parts which are arranged end to end so as to delimit between them a welding bevel (6) whose longitudinal direction corresponds to a circumferential direction of the parts, the second direction according to the thickness of the parts to a radial direction and the direction in which the width of the bevel extends to an axial direction of the parts (2, 4).

8. Use of a process according to any one of claims 1 to 7 for the connection of a pipe (2) of a steam generator bottom (1) of a pressurised-water nuclear reactor of structural steel and a ducting of the primary circuit or a part for connection (4) to the primary circuit of the nuclear reactor of austenitic stainless steel.
